# EUROPEAN PATENT SPECIFICATION

(11) **EP 1 006 740 B1**
(45) Date of publication and mention of the grant of the patent: **20.09.2006**
(21) Application number: 99123760.3
(22) Date of filing: 30.11.1999
(51) Int. Cl.: H04Q 7/22, H04B 7/26, H04Q 7/38

(54) **Method for realizing multicast service in mobile communication system**
Verfahren zur Realisierung eines Mehrfachübertragungsdienstes in einem mobilen Übertragungssystem
Procédé pour la réalisation d'un service multidestination dans un système de communication mobile

(30) Priority: 02.12.1998 KR 9852599
(43) Date of publication of application: 07.06.2000
(73) Proprietor: LG ELECTRONICS INC., Seoul (KR)
(72) Inventor: Hwang, In Tae, Yongin-shi, Kyonggi-do (KR); Shin, Sang Rim, Tongan-gu, Anyang-shi, Kyonggi-do (KR); Ok, Myoung Jin, Seoul (KR)
(74) Representative: Turi, Michael

(56) References cited:
- EP-A- 0 828 355
- WO-A-96/10895
- FR-A- 2 717 969
- US-A- 5 793 756
- ETSI: 'Digital cellular telecommunications system (Phase 2+); General Packet Radio Service (GPRS); Service description Stage 1 (GSM 02.60); DRAFT' ETSI STANDARDS, EUROPEAN TELECOMMUNICATIONS STANDARDS INSTITUTE November 1998, SOPHIA ANTEPOLIS, FRANCE, pages 1 - 54, XP014026822

## Description

### BACKGROUND OF THE INVENTION

### Field of the Invention

The present invention relates to a mobile communication system. More particularly, it relates to a method for realizing multicast service in a mobile communication system.

### Description of the Prior Art

A multicast service is a unidirectional Point-to-Multipoint service which transmits a message to all subscribers presently positioned in a geographical area defined by a service requester in a single source entity.

The message includes a group identifier which indicates whether the message is an interesting message for a specific subscriber included in a specific multicast group, or the message is an interesting message for all subscribers.

For example, the multicast service may include news information, weather information, stock information, and traffic reports, as well as a production or service advertisement.

Conventionally, a short message service is simultaneously provided to a plurality of users by using a paging channel.

However, since the conventional mobile communication system simultaneously provides a short message service to a plurality of users through a paging channel, the user cannot select various multicast services.

FR-A-2 717 969 discloses a process and equipment for broadcasting messages to mobile stations. Broadcasting does not need a mobile station to request a service, the broadcasting just sends information to all mobile stations involved and if a mobile station is interested in receiving the broadcast information, then the mobile station just receives it. Short messages, for example, sent by broadcasting, are received by all the mobile stations associated with the system. More specifically, in this method the messages are broadcast successively and at regular intervals to mobile stations on a particular radio channel of the TDMA network.

Similarly, WO-A-96 10895 also refers to broadcasting using a paging channel.

EP-A-0 828 355 describes the use of "spreading code" and "scrambling code" in a CDMA system to determine a multicast service channel.

### Summary of the invention

According to an aspect of the invention, a method of realising multicast service in a mobile communication system according to the subject-matter of claim 1 is provided.

Further aspects of the invention are set forth in the dependent claims, the following description and the drawings.

In some embodiments, control and data frame areas according to various multicast services are shared through one downlink shared channel (DSCH), and either the control frame area or data frame area is loaded on one downlink shared channel (DSCH) and then transmitted. As a result, various multicast services are simultaneously provided to a plurality of users.

Additional features and advantages of the embodiments will be set forth in the description which follows, and in part will be apparent from the description, or may be learned by practice of the invention. The objective and other advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

### BRIEF DESCRIPTION OF THE DRAWINGS

Further objects and other advantages of the present invention will become apparent from the following description in conjunction with the attached drawings, in which:
FIG. 1 illustrates a structure of a downlink shared channel (DSCH) control/data frame in a method for realizing multicast service in a mobile communication system, according to a preferred embodiment of the present invention;
FIG. 2 illustrates another embodiment of FIG. 1;
FIG. 3 illustrates a processing step between a downlink shared channel (DSCH) and a multicast service; and
FIG. 4 illustrates a multicast state diagram related to a downlink shared channel (DSCH).

### DETAILED DESCRIPTION OF THE PREFERRED EMBODIMENT

A preferred embodiment of the present invention will now be described in detail with reference to the accompanying drawings.

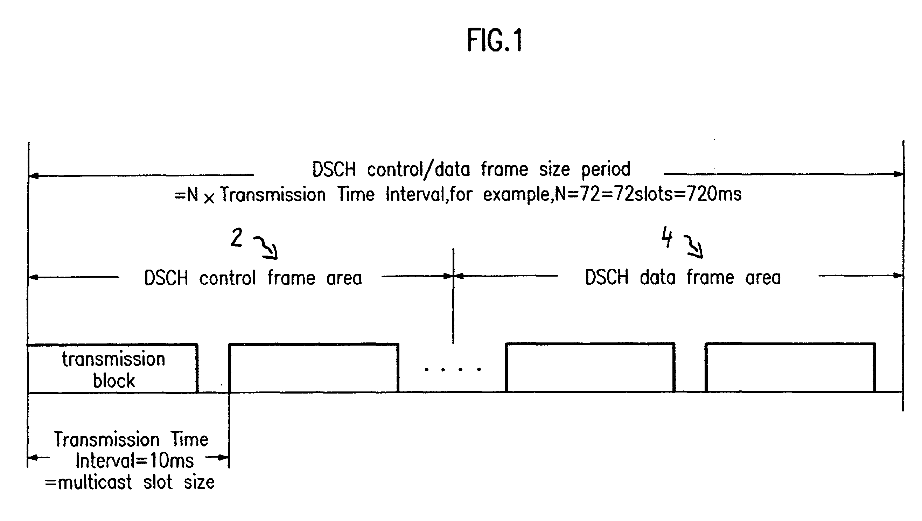

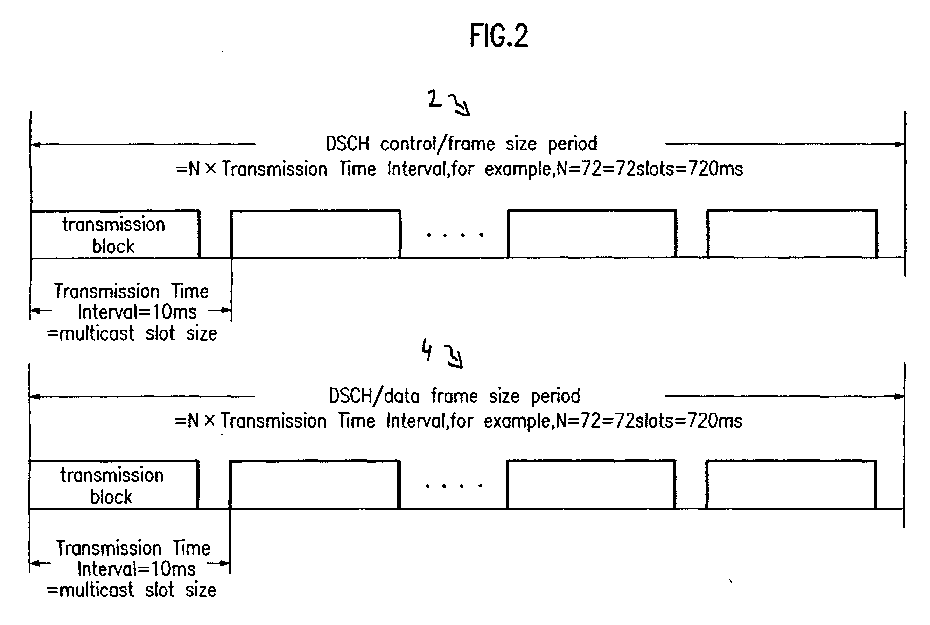

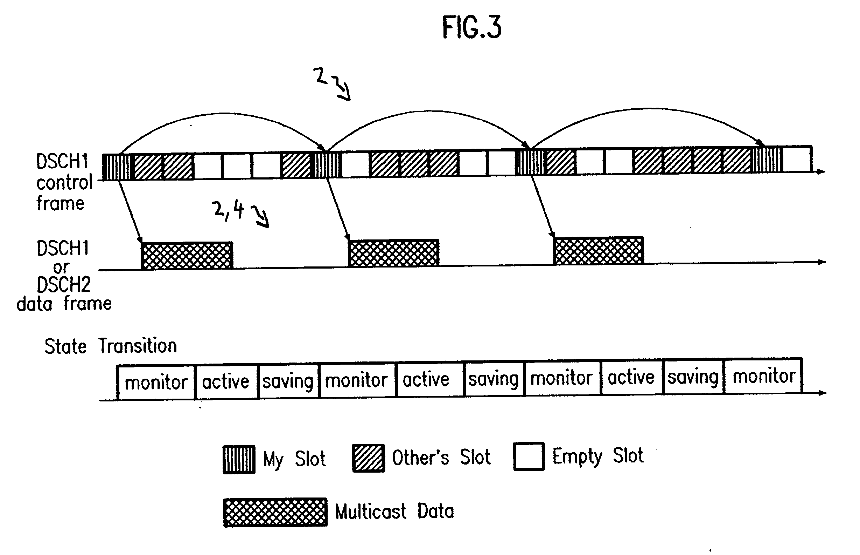

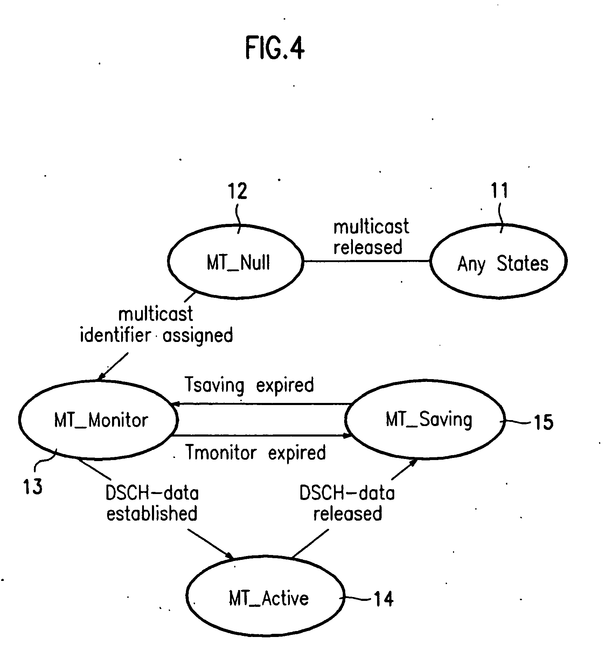

FIG. 1 illustrates a structure of a downlink shared channel (DSCH) control/data frame in a method for realizing multicast service in a mobile communication system, according to a preferred embodiment of the present invention; FIG. 2 illustrates another embodiment of FIG. 1; FIG. 3 illustrates a processing step between a downlink shared channel (DSCH) and a multicast service; and FIG. 4 illustrates a multicast state diagram related to a downlink shared channel (DSCH).

A multicast service is a unidirectional Point-to-Multipoint service which transmits a message to all subscribers presently positioned in a geographical area defined by a service requester in a single source entity.

The message includes a group identifier which indicates whether the message is an interesting message for a specific subscriber included in a specific multicast group, or the message is an interesting message for all subscribers.

For example, the multicast service may include news information, weather information, stock information, and traffic reports, as well as a production or service advertisement.

The multicast service has some requirements such as unidirectional channels and a strong error correction mechanism, because a design considering both encryption/reverse-encryption and ARQ(i.e., automatic repeat request) for the user group is dissatisfied in the multicast service.

For example, each mobile station transmits a multicast request message to a multicast server placed on a predetermined position of a core multicast server.

Also, each mobile station transmits a user identifier, service identifier, and some other parameters to the multicast server.

After that, the multicast server transmits a multicast response message having a multicast group identifier and an estimated period to each mobile station, so that each mobile station receives a multicast service.

That is, each mobile station receives a multicast service identifier when performing a random access from the multicast server, and requests various multicast services such as news information, weather information, stock information, and traffic reports, etc.

Accordingly, as shown in FIG. 1, the multicast server loads a multicast response message having both a multicast group identifier and an estimated period on a downlink shared channel (DSCH), and then transmits it.

The downlink shared channel (DSCH) exists only on a downlink, can use a beamforming, has a quickly variable rate, and can uses a slow power control. The downlink shared channel (DSCH) can be combined with a dedicated channel, or can be used in a stand-alone channel. If the downlink shared channel (DSCH) is combined with the dedicated channel, it is possible to use a fast power control. Also, the downlink shared channel (DSCH) has request characteristics about inband identification of a mobile station, outband identification, or inherent addressing.

The downlink shared channel (DSCH) control/data frame size period is determined as N x (transmission time interval). For example, N = 72 = 72 slots = 720ms.

The downlink shared channel (DSCH) control/data frame period is comprised of a downlink shared channel (DSCH) control frame area and a downlink shared channel (DSCH) data frame area.

The downlink shared channel (DSCH) control frame area and the downlink shared channel (DSCH) data frame area are comprised of the same transmission blocks and the same transmission time intervals made of a slot time. The transmission time interval is 10ms, and is the same as a multicast slot size.

After the above communication mode, each mobile station monitors a multicast downlink shared channel (DSCH) control frame of downlink shared channel (DSCH) in a non-slotted mode.

The downlink shared channel (DSCH) control frame area includes a multicast service identifier such as a multicast temporary subscriber identification (MTSI) and radio network temporary identity (RNTI).

In addition, the downlink shared channel (DSCH) control frame area includes a slot time and a data frame slot time in order to perform a monitoring operation in each mobile station.

The downlink shared channel (DSCH) control frame area selectively includes a transport channel identifier of the downlink shared channel (DSCH) receiving a multicast DSCH-data frame.

If each mobile station detects a downlink shared channel (DSCH) control frame slot having a multicast identifier by searching the downlink shared channel (DSCH) transmitted from the multicast server, each mobile station switches a received frame with a downlink shared channel (DSCH) data frame which equals to a downlink shared channel or another downlink shared channel, and then receives a multicast data in a data frame area of a switched downlink shared channel (DSCH), thereby receiving various multicast services.

Also, a multicast server is divided into a downlink shared channel (DSCH) control frame size period as shown in FIG. 1, and performs a transmission to each mobile station via a downlink shared channel (DSCH). Otherwise, as shown in FIG. 2, the multicast server individually loads a downlink shared channel (DSCH) control frame area and a downlink shared channel (DSCH) data frame area on a downlink shared channel (DSCH).

As a result, by the above steps, each mobile station detects a downlink shared channel (DSCH) control frame area and a downlink shared channel (DSCH) data frame area by searching a downlink shared channel (DSCH) control frame size period.

That is, in each transmission block within a downlink shared channel (DSCH) data frame area, each mobile station detects a multicast data corresponding to a multicast service involved in each transmission block within the downlink shared channel (DSCH) control frame area, thereby providing various multicast services.

As shown in FIG. 3, in order to provide a multicast service, a multicast server loads a control signal according to a multicast service on DSCH1 control frame, and performs a transmission of the control signal.

My slot, other's slot and a plurality of empty slots are repeated in the DSCH1 control frame.

In addition, the multicast server loads a multicast data corresponding to the multicast service on DSCH1 or DSCH2 data frame, and transmits it.

The DSCH1 control frame and the DSCH1 or DSCH2 data frame have the following state variation, i.e., monitor state -> saving state -> active state.

As shown in FIG. 4, if a multicast service is released under any states 11, a mobile station goes to a mobile station idle state (MT_Null) 12.

The mobile station idle state (MT_Null) 12 means a state that the multicast service is not activated and a downlink shared channel (DSCH) is not determined. The mobile station idle state (MT_Null) 12 is on standby until a multicast service is activated.

After that, if a multicast identifier is allocated by requesting a multicast service, a mobile station goes to a monitor state (MT_monitor) 13 from the idle state (MT_Null) 12.

In the mobile station monitor state (MT_monitor) 13, the mobile station monitors a downlink shared channel (DSCH) for a downlink shared channel (DSCH) control frame, and does not monitor a downlink shared channel (DSCH) for a downlink shared channel (DSCH) data frame.

In addition, the mobile station monitor state (MT_monitor) 13 means a state that a mobile station monitors a downlink shared channel (DSCH) to determine a multicast control frame having the allocated multicast service.

Here, in the mobile station monitor state (MT_monitor) 13, although the mobile station does not reach a state for monitoring the downlink shared channel (DSCH), a mobile station starts a timer Tₘₒₙᵢₜₒᵣ for monitoring the downlink shared channel (DSCH).

In the mobile station monitor state (MT_monitor) 13, a mobile station checks the allocated multicast identifier, thereby receiving a DSCH control frame of the downlink shared channel (DSCH).

In the mobile station monitor state (MT_monitor) 13, a mobile station goes to a mobile station active state (MT_Active) 14 when the allocated multicast identifier is confirmed in a DSCH control frame. If the allocated multicast identifier is not confirmed in the DSCH control frame before an operation completion of the timer Tₘₒₙᵢₜₒᵣ, the mobile station goes to a mobile station saving state (MT_Saving) 15.

Accordingly, in the mobile station active state (MT_Active) 14, the mobile station does not monitor the downlink shared channel (DSCH) control frame, and monitors the downlink shared channel (DSCH) data frame.

Thereafter, in the mobile station active state (MT_Active), the mobile station receives a multicast data on DSCH determined for the downlink shared channel (DSCH) data frame, and then goes to a mobile station saving state (MT_Saving) 15 if the receiving operation is completed.

Accordingly, the mobile station saving state (MT_Saving) 15 means a state that the mobile station does not monitor the downlink shared channel (DSCH) data frame and the downlink shared channel (DSCH) control frame.

Namely, although the mobile station does not go to the mobile station saving state (MT_Saving) in the mobile station saving state (MT_Saving) 15, the mobile station performs a power saving until expiration of the timer T_{saving} after a timer T_{saving} to save a power starts operating.

After that, if the expiration of the timer T_{saving} is made in the mobile station saving state (MT_Saving) 15, the mobile station goes to the mobile station monitor state (MT_Monitor) 13, and repeats the above steps.

As described above, a method for realizing multicast service in a mobile communication system simultaneously provides various multicast services to the plurality of users through one common channel, in order to prevent an interference about the other party in case of a small quantity of data.

It is understood that various other modifications will be apparent to and can be readily made by those skilled in the art without departing from the scope of this invention.

## Claims

1. A method of realizing multicast service in a mobile communication system, the method comprising the steps of
a) requesting, by a mobile station, a multicast service from a multicast server associated with the system by transmitting a service identifier to the multicast server;
b) allocating a multicast service identifier to the mobile station by the multicast server;
c) forming control and data frames (2, 4) according to a plurality of multicast services on at least one common downlink channel, and thereby providing the multicast service requested by the mobile station using the control and data frames;
d) monitoring in the mobile station, the control frames (2) of the transmitted common channel and detecting the multicast service identifier in a control frame (2); and
e) receiving, in the mobile station, the multicast service corresponding to a data frame (4) in accordance to the detected multicast service identifier.

2. The method of claim 1, wherein the control and data frames (2, 4) are in the same channel.

3. The method of claim 1, wherein the control and data frames (2, 4) are in different channels.

4. The method of claim 1, wherein the common channel is a downlink shared channel (DSCH).

5. The method of claim 4, wherein the downlink shared channel (DSCH) is divided into a control frame area (2) and a data frame area (4).

6. The method of claim 5, wherein the control frame area (2) and the data frame area (4) is made of a period having the same transmission block and the same transmission time interval.

7. The method of claim 6, wherein the period is 10 milliseconds.

8. The method of claim 4, wherein the downlink shared channel (DSCH) is an additional downlink shared channel (DSCH) comprised of a control frame area (2) and a data frame area (4).

## Patentansprüche

1. Verfahren zur Realisierung eines Multicast-Dienstes in einem mobilen Kommunikationssystem, wobei das Verfahren die Schritte umfasst:
a) Anfordern eines Multicast-Dienstes durch eine mobile Station von einem Multicast-Hauptrechner, der dem System zugeordnet ist, indem eine Dienstidentifizierung zu dem Multicast-Hauptrechner übertragen wird;
b) Zuordnen einer Multicast-Dienstidentifizierung zu der mobilen Station durch den Multicast-Hauptrechner;
c) Bilden von Steuer- und Datenrahmen (2, 4) gemäß einer Mehrzahl von Multicast-Diensten auf wenigstens einem gemeinsamen Downlink-Kanal und dadurch Bereitstellen des von der mobilen Station angeforderten Multicast-Dienstes unter Verwendung der Steuer- und Datenrahmen;
d) Überwachen der Steuerrahmen (2) des übertragenen gemeinsamen Kanals und Detektieren der Multicast-Dienstidentifizierung in einem Steuerrahmen (2) in der mobilen Station; und
e) Empfangen, in der mobilen Station, des Multicast-Dienstes, der einem Datenrahmen (4) entspricht, gemäß der detektierten Multicast-Dienstidentifizierung.

2. Verfahren nach Anspruch 1, bei dem sich die Steuer- und Datenrahmen (2, 4) in dem gleichen Kanal befinden.

3. Verfahren nach Anspruch 1, bei dem sich die Steuer- und Datenrahmen (2, 4) in unterschiedlichen Kanälen befinden.

4. Verfahren nach Anspruch 1, bei dem der gemeinsame Kanal ein gemeinsamer genutzter Downlink-Kanal ist (DSCH; engl.: downlink shared channel).

5. Verfahren nach Anspruch 4, bei dem der gemeinsam genutzte Downlink-Kanal (DSCH) in einen Steuerrahmenbereich (2) und einen Datenrahmenbereich (4) unterteilt ist.

6. Verfahren nach Anspruch 5, bei dem der Steuerrahmenbereich (2) und der Datenrahmenbereich (4) aus einer Periode aufgebaut sind, die den gleichen Übertragungsblock und das gleiche Übertragungszeitintervall aufweisen.

7. Verfahren nach Anspruch 6, bei dem die Periode 10 Millisekunden beträgt.

8. Verfahren nach Anspruch 4, bei dem der gemeinsam genutzte Downlink-Kanal (DSCH) ein zusätzlicher gemeinsam genutzter Downlink-Kanal (DSCH) ist, der einen Steuerrahmenbereich (2) und einen Datenrahmenbereich (4) umfasst.

## Revendications

1. Procédé de mise en oeuvre d'un service de multidiffusion dans un système de communication mobile, le procédé comprenant les étapes consistant à :
a) demander, par une station mobile, un service de multidiffusion d'un serveur de multidiffusion associé au système en transmettant un identificateur de service au serveur de multidiffusion,
b) allouer un identificateur de service de multidiffusion à la station mobile par le serveur de multidiffusion ;
c) former des trames de données et de contrôle (2, 4) selon une pluralité de services de multidiffusion sur au moins un canal en liaison descendante commun et fournir ainsi le service de multidiffusion demandé par la station mobile en utilisant les trames de données et de contrôle ;
d) surveiller dans la station mobile, les trames de contrôle (2) du canal commun transmis et détecter l'identificateur de service de multidiffusion dans une trame de contrôle (2) ; et
e) recevoir, dans la station mobile, le service de multidiffusion correspondant à une trame de données (4) selon l'identificateur de service de multidiffusion détecté.

2. Procédé selon la revendication 1, dans lequel les trames de données et de contrôle (2, 4) sont dans le même canal.

3. Procédé selon la revendication 1, dans lequel les trames de données et de contrôle (2, 4) sont dans des canaux différents.

4. Procédé selon la revendication 1, dans lequel le canal commun est un canal partagé en liaison descendante (DSCH).

5. Procédé selon la revendication 4, dans lequel le canal partagé en liaison descendante (DSCH) est divisé en une zone de trame de contrôle (2) et une zone de trame de données (4).

6. Procédé selon la revendication 5, dans lequel la zone de trame de contrôle (2) et la zone de trame de données (4) est composée d'une période ayant le même bloc de transmission et le même intervalle de temps de transmission.

7. Procédé selon la revendication 6, dans lequel la période est de 10 millièmes de seconde.

8. Procédé selon la revendication 4, dans lequel le canal partagé de voie descendante (DSCH) est un canal partagé en liaison descendante additionnel (DSCH) composé d'une zone de trame de contrôle (2) et d'une zone de trame de données (4).
